Europäisches Patentamt

European Patent Office

Office européen des brevets

(11) Publication number: **0 045 780**
**B1**

## (12) EUROPEAN PATENT SPECIFICATION

(45) Date of publication of patent specification: **06.02.85**

(21) Application number: **81900577.8**

(22) Date of filing: **20.02.81**

(86) International application number:
**PCT/FI81/00011**

(87) International publication number:
**WO 81/02440 03.09.81 Gazette 81/21**

(51) Int. Cl.⁴: **E 06 B 3/96,** A 47 G 1/10

(54) **A CORNER FASTENER.**

(30) Priority: **21.02.80 FI 800514**

(43) Date of publication of application:
**17.02.82 Bulletin 82/07**

(45) Publication of the grant of the patent:
**06.02.85 Bulletin 85/06**

(84) Designated Contracting States:
**DE GB SE**

(56) References cited:
**US-A-1 461 440**
**US-A-1 663 580**
**US-A-1 779 729**
**US-A-1 920 276**
**US-A-1 959 360**

(73) Proprietor: **ALANDER, Kaarina**
**Larin Kyöstintie 13 C 7**
**SF-00650 Helsinki 65 (FI)**

(72) Inventor: **ALANDER, Kaarina**
**Larin Kyöstintie 13 C 7**
**SF-00650 Helsinki 65 (FI)**

(74) Representative: **Zipse + Habersack**
**Kemnatenstrasse 49**
**D-8000 München 19 (DE)**

## Description

The object of the present invention is to provide a corner fastener for a joint in door frame or similar sections. These include, among others, window casements and frames, picture frames, etc. The invention is preferably applied to jointing frames made of wood, but it is also fit for jointing sections made of other materials, for instance plastic.

Door frames, casements, and other similar sections are nowadays generally manufactured in ready-made elements by sash and door factories or carpenters' workshops, and then mounted in their respective positions at buildings sites. The highly developed standardisation of doors and windows has made it possible to produce them in large series. The frames and casements produced in series are manufactured using traditional carpenter's joints, the so-called claw joints; these require the use of special routers and are comparatively laborious to produce. Thus it is usually possible to manufacture the joints only industrially.

On the other hand, the transportation of ready-made casements and frames is uneconomical, since they take up a relatively large space.

Corner fasteners for frames with fastener plates or bracings of metal are previously known US patent No. 1 334 553 and German patent No. 816 749 can be referred to as examples. These introduce fasteners in which fastener plates of metal are placed in a groove in the frame. The fastener plates have been attached to the frames by nailing. In the US patent they are nailed on either the inner or the outer surface of the frame, and in the German patent on the lateral surfaces of the frame.

US patent No. 1 920 276 gives a corner fastener of metal, which is attached to the frame with die-cut teeth. A similar solution is also given in Swedish patent application No. 1773/71.

A drawback of the solutions presented above is the awkwardness and slowness of their use. This is due to the difficulty of using nails or the complicated pressure devices needed. Moreover, nails are not desirable on the surface of the frame.

US patent No. 1 959 360 discloses a nail for a corner joint. The nail has a flat body with an arrowheaded tongue in one end and a V-shaped groove in the opposite end. Along the sides of the flat body the nail is provided with flanges which diverge from the arrowheaded end to the grooved end. The sections of wood to be jointed are mitered and grooves are cut on the respective positions within the mitered edges to serve as guides for the nail. When the nail is pressed the V-shaped end ahead from the outer corner into the groove of the corner joint the flanges bite into the walls of the groove and draw the sections tightly together. The length of the nail is prechosen so that it extends through the whole corner joint.

Two drawbacks can be mentioned in connection with the above described nail. The flanges of the nail may split along the groove the sections of the frame especially if the sections are made of hard wood. The nail should be as long as the mitered edges of the sections. So the nail which can be used depends on the breadth of the sections of the frame.

In US patent No. 1 779 729 is described a nail with corrugated body plate. The nail is used for securing together strips of wood which form a block in making parquetry. The strips are jointed together along their longitudinal edges by tongue and groove. Further the strips are provided with end grooves for jointing crosswise an adjacent block with them. The parallel strips are secured together with the nails at the opposite ends of the strips. Each nail is driven into the wood along the grain in the end groove until it is flushed with the bottom of the groove.

The purpose of the corrugation in the body plate is to make the nail rigid and to prevent from splitting the wood when the whole nail is driven deeply inside the strips of wood. But nevertheless the nail may split the wood especially if the strips are made of hard wood.

US patent No. 1 663 580 describes a fastener for fastening together two pieces of wood for instance in the manufacture of boxes. The fastener comprises a round corrugated metal plate adapted to be inserted into semi-circular grooves cut into the joining faces of the pieces of wood to be fastened together. Tongues are projecting from the plane of said metal plate and are adapted to bite into the wood upon a turning of said metal plate in the groove.

The turning of the metal plate requires a special key for insertion into a hole in the middle of the metal plate and through a hole which has to be provided in the joining faces of the two pieces of wood. The metal plate must not fit very closely within the grooves to do not render difficult its turning. But consequently the metal plate can give only limited resistance against forces onto the joint. Further the cutting of the semi-circular grooves into the joining faces is laborious.

It is the object of this invention to provide a corner fastener for door frames or similar sections which can be easily assembled without special tools at the building site, which is reliable and can be used with different sizes of frames or similar sections.

A corner fastener according to the present invention has certain advantages with respect to the above described specification and drawbacks explained above can be avoided. The characteristic features of the invention are given in the patent claims.

A corner fastener constructed according to the invention is attached to the sections of the frame to be jointed substantially by two ways:

firstly by friction between corrugation or protrusions of the fastener plate and the groove which is not so broad as the effective thickness of the plate, secondly by teeth which are disposed on the inner edge of the plate and which teeth are pressed into the bottom of the groove. Thus the joint is effective and reliable. Frames or casements of different sizes are easy to produce beforehand due to the fact that there are needed only simple grooves on the surfaces of the sections and the same fastener plates can be used in jointing different sections.

The frames can be assembled without special tools or machines. In this respect the angled arms at right angles to the plate are important. The arms also drive the fastener plates to its position in the corner joint during assemblage. So the danger of splitting is minimized. The transportation of the sections of the frames is easy and does not require a lot of space since the assemblage can be carried out at the building site.

In the following the invention is explained in detail with references to the enclosed drawings.

Figure 1 shows one advantageous embodiment of the invention,

Figure 2 shows another possible embodiment of the invention,

Figure 3 shows a corner fastener according to the invention,

Figure 4 shows a section IV—IV of the corner fastener in Figure 3,

Figure 5 shows cross-section V—V of Figure 1.

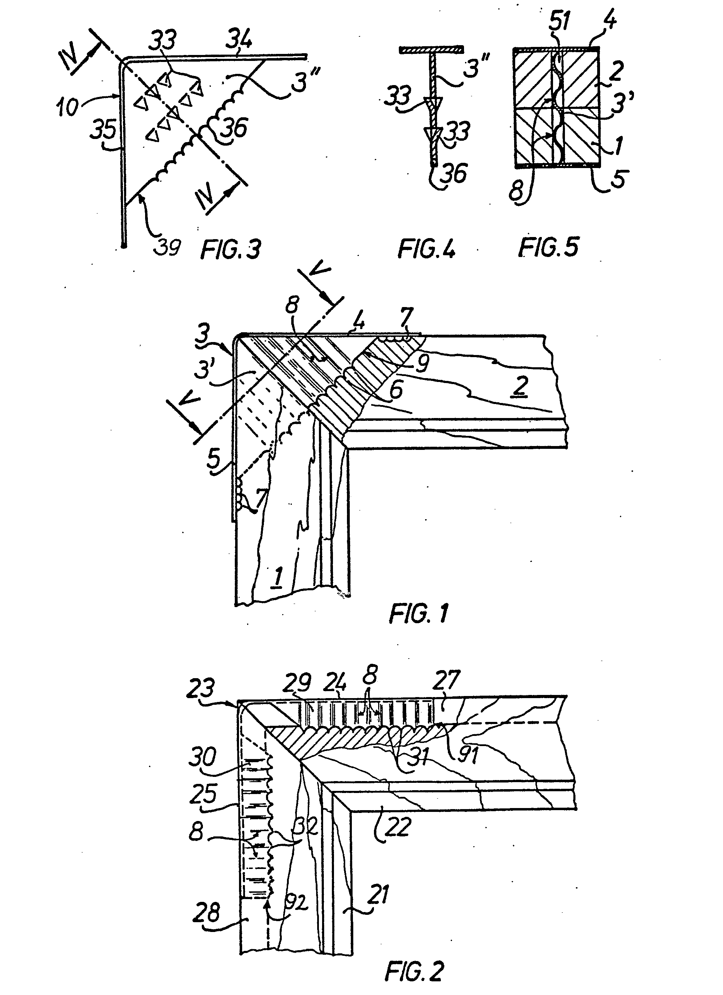

According to Figure 1 the ends of the horizontal and vertical sections 1 and 2 of the frame are slanted at 45° angles. Sections 1 and 2 are jointed using corner fastener 3 constructed according to the invention. The corner fastener 3 is made of a metal plate by bending it in order to produce two arms 4 and 5, which are at right angles to each other. The sheet metal fastener plate 3' is connected at right angles to the arms 4 and 5 which are placed against the outer edges of the frame sections 1 and 2. For the fastener plate 3' a groove 51 has been made in the frame. The fastener plate 3' is provided with corrugation 8 so that it can be inserted into the said groove 51 only by pressing. To provide an additional fastening effect the edge 9 of the fastener plate 3' comprises teeth 6, which are pressed into the wood. The arms 4 and 5 are respectively provided with knobs or protrusions 7.

Figure 2 shows another advantageous embodiment of the present invention. In this case the vertical and horizontal sections 21 and 22 of the frame are respectively slanted at 45° angles. On the outer surfaces of the frame have been cut two grooves 27 and 28, wherein the corner fastener 23 according to the invention is pressed. The corner fastener 23 is made e.g. by bending a metal plate or by tooling an U-profile. The corner fastener 23 consists of two arms 24 and 25 at right angles to each other and placed against the outer surfaces of the two sections of the frame. Both arms together with their fastener plates 29, 30 have a U-shaped cross-section.

Then the fastener plates of the U-profile are pressed into the grooves 27 and 28 in the frame. The fastening of the corner fastener in the grooves is achieved through a similar corrugation 8 as in Figure 1. Correspondingly also the edges 91, 92 of the sheet metal fastener plates 29, 30 are provided with teeth 31 and 32, which are pressed into the bottoms of the grooves 27 and 28.

Figure 3 shows another example of the preferable application of the corner fastener according to the invention. This corner fastener 10 is bent out of a metal plate, and it comprises arms 34 and 35. The sheet metal fastener plate 3'' to be inserted in the groove of the frame is now provided with triangular protrusions 33 punched out of the sheet-metal, the shape of which can also be seen in the cross-section in Figure 4. The edges 39 of the fastener plate 3'' also comprises teeth 36, which are pressed into the bottom of the groove in the frame.

## Claims

1. A corner fastener for a joint in door frame or similar sections (1, 2, 21, 22), said fastener being made of sheet metal comprising two angled arms (4, 5, 24, 25, 34, 35) for mounting flush against the edge surfaces of the joint sections, connected to at least one fastener plate (3', 3'', 29, 30), said fastener plate being intended to be inserted into a groove (51, 57, 28) made in the joint sections, characterized in that said fastener plate is provided with corrugations and/or protrusions (8, 33) such that in use the effective thickness of the fastener plate (3', 3'', 29, 30) is slightly greater than the width of said groove (51, 27, 28), and that the free edge (9, 39, 91, 92) of the fastener plate is provided with teeth (6, 36, 31, 32) intended to be pressed into the bottom of the groove.

2. A corner fastener according to claim 1 characterized in that two fastener plates (29, 30) are connected one to each arm (24, 25) respectively, said two fastener plates being intended to be inserted into grooves (27, 28) made in the joint sections.

## Patentansprüche

1. Eckverbindung für eine Stoßstelle in Türrahmen-oder dergleichen Abschnitten, welche Verbindung, hergestellt aus Metallblech, zwei Winkelarme (4, 5, 24, 25, 34, 35) zur bündigen Montage gegen die Randflächen der Abschnitte der Stoßstelle aufweist und mit zumindest einer Halteplatte (3', 3'', 29, 30) verbunden ist, welche Halteplatte zum Einsetzen in eine in den Abschnitten der Stoßstelle ausgebildete Nut (51, 27, 28) bestimmt ist, dadurch
gekennzeichnet, daß diese Halteplatte derart
mit Wellungen und/oder Vorsprüngen (8, 33)
versehen ist, daß in Gebrauch die effektive
Dicke der Halteplatte (3', 3'', 29, 30) leicht
größer als die Weite dieser Nut (51, 27, 28) ist,
und daß die freie Kante (9, 39, 91, 92) der
Halteplatte mit Zähnen (6, 36, 31, 32) versehen
ist, die dazu bestimmt sind, in den Boden der
Nut gepreßt zu werden.

2. Eckverbindung nach Anspruch 1, dadurch
gekennzeichnet, daß zwei Halteplatten (29, 30)
vorgesehen sind und jeweils eine mit jedem
Arm (24, 25) verbunden ist, welche Halteplatten dazu bestimmt sind, in Nuten (27, 28)
eingesetzt zu werden, die in den Abschnitten
der Stoßstelle ausgebildet sind.

**Revendications**

1. Une cornière de fixation pour une liaison
dans un cadre de fenêtre ou profilés analogues
(1, 2, 21, 22), ladite fixation étant réalisée à
partir d'une tôle métallique comprenant deux
bras à angle droit (4, 5, 24, 25, 34, 35) prévus
pour être montés de niveau contre la surface
des bords des profilés de la liaison, reliée à au
moins une plaque de fixation (3', 3'', 29, 30),
ladite plaque de fixation étant prévue pour être
introduite dans une rainure (51, 57, 28) formée
dans les profilés de la liaison, caractérisée en ce
que lesdites plaques de fixation présentent des
ondulations et/ou des saillies (8, 33) telles qu'en
service l'épaisseur effective de la plaque de fixation (3', 3'', 29, 30) soit légèrement plus grande
que la largeur de ladite rainure (51, 27, 28), et
en ce que le bord libre (9, 39, 91, 92) de la
plaque de fixation est muni de dents (6, 36, 31,
32) destinées à être pressées dans le fond de la
rainure.

2. Une cornière de fixation selon la
revendication 1, caractérisée en ce que deux
plaques de fixation (29, 30) sont respectivement reliées chacune à un bras (24, 25), lesdites deux plaques de fixation étant destinées à
être introduites dans des rainures (27, 28)
formées dans les profilés de liaison.

FIG.3

FIG.4

FIG.5

FIG. 1

FIG.2